# EUROPÄISCHE PATENTSCHRIFT

(11) **EP 1 669 794 B1**
(45) Veröffentlichungstag und Bekanntmachung des Hinweises auf die Patenterteilung: **28.05.2008**
(21) Anmeldenummer: 05023842.7
(22) Anmeldetag: 02.11.2005
(51) Int. Cl.: G02C 5/22

(54) **Inklinationsanordnung für eine Brille**
Inclination adjusting arrangement for spectacles
Agencement en inclinaison destiné à des lunettes

(30) Priorität: 08.12.2004 DE 202004018982 U
(43) Veröffentlichungstag der Anmeldung: 14.06.2006
(73) Patentinhaber: Alpina International Sport + Optik-Vertriebs-GmbH, 86316 Friedberg/Derching (DE)
(72) Erfinder: Grau, Werner, 86316 Haberskirch (DE)
(74) Vertreter: Schneck, Herbert

(56) Entgegenhaltungen:
- DE-B- 1 285 767
- DE-U1-2202004 018 98
- US-A- 5 565 937
- US-A- 5 812 234
- US-A- 6 086 200
- US-B1- 6 618 901

## Beschreibung

Die Erfindung richtet sich auf eine Inklinationsanordnung für eine Brille und auf eine Brille mit einer derartigen Inklinationsanordnung, wobei die Inklinationsanordnung ein horizontales Schwenkgelenk für jeweils einen Bügel und eine konzentrisch zum Schwenkgelenk angeordnete Rasteinrichtung umfassend eine Mehrzahl von Nuten und wenigstens einen in die Nuten einrastbaren Vorsprung umfasst.

Brillen mit derartigen Inklinationsanordnungen sind in ganz unterschiedlichen Ausführungsformen bekannt. Durch die individuelle Einstellbarkeit der Neigung der Bügel relativ zur Ebene der Scheiben wird der Tragkomfort erhöht und ein guter, angenehmer Sitz gewährleistet.

Herkömmlicherweise sind die Rastnuten beziehungsweise Rastvorsprünge der Inklinationsanordnung am Rahmen der Brille selbst ausgebildet und die Inklinationsanordnung ist dementsprechend individuell für jede Rahmen-Bügel-Konstruktion ausgestaltet. Ein solche Anordnung ist beispielsweise aus US 6 086 200 bekannt.

Hiervon ausgehend liegt der Erfindung die Aufgabe zugrunde, eine Inklinationsanordnung zu schaffen, die vom Brillendesign unabhängig ist und dementsprechend für ganz unterschiedliche Brillen einsetzbar ist, die kostengünstig herstellbar und vor allem schnell und einfach montierbar ist.

Diese Aufgabe wird erfindungsgemäß dadurch gelöst, dass sie ein Rahmenbefestigungsteil und ein Bügelbefestigungsteil aufweist, wobei das Rahmenbefestigungsteil mit einer im Querschnitt kreisförmigen Ausnehmung versehen ist, die sich über einen Winkelbereich von etwas mehr als 180° erstreckt, wobei das Bügelbefestigungsteil einen einen korrespondierenden Querschnitt aufweisenden Ansatz besitzt, der in die Ausnehmung des Rahmenbefestigungsteils einrastbar ist, wodurch das Schwenkgelenk ausgebildet ist, und wobei an einem Berührungsbereich zwischen Rahmenbefestigungsteil und Bügelbefestigungsteil die Rastnuten beziehungsweise Rastvorsprünge ausgebildet sind.

Diese Ausgestaltung ermöglicht eine schnelle und einfache Montage und eine definierte Einstellbarkeit unterschiedlicher Winkelpositionen der Bügel.

An der Oberseite des Rahmenbefestigungsteils ist eine, vorzugsweise zwei, Befestigungsbohrungen ausgebildet, um die Anbringung an einem Brillenrahmen zu ermöglichen.

Das Bügelbefestigungsteil weist eine Ausnehmung und fluchtende Bohrungen auf, so dass mittels einer Schraube ein Bügel um eine im Wesentlichen vertikale Achse schwenkbar und einklappbar befestigt werden kann.

Günstigerweise weist das Rahmenbefestigungsteil einen Ansatz auf, der in eine annähernd U-förmige Ausnehmung des Bügelbefestigungsteils eingreift, wobei Rastnuten an einer konzentrisch zur Schwenkachse gekrümmten U-Seitenwand und Rastvorsprünge an einer daran anliegenden Stirnwand des Rahmenbefestigungsteils ausgebildet sind.

Zur Erzielung einer Fixierung in Richtung der Schwenkachse ist vorgesehen, dass das Rahmenbefestigungsteil einen Stegansatz aufweist, der in eine korrespondierende Nut am Ansatz des Bügelbefestigungsteils eingreift.

Nachfolgend wird die Erfindung anhand eines bevorzugten Ausführungsbeispiels in Verbindung mit der Zeichnung näher erläutert. Dabei zeigen:
- Fig. 1: einen Schnitt durch eine erfindungsgemäße Inklinationsanordnung und
- Fig. 2: eine Seitenansicht einer erfindungsgemäßen Inklinationsanordnung.

Eine in der Zeichnung dargestellte Inklinationsanordnung 1 umfasst ein Rahmenbefestigungsteil 2 und ein Bügelbefestigungsteil 3.

Das Rahmenbefestigungsteil 2 umfasst zwei Befestigungsbohrungen 4 für eine Schraubbefestigung an einem beliebigen Rahmen.

Das Rahmenbefestigungsteil 2 weist eine im Querschnitt kreisabschnittförmige Ausnehmung 5 auf, die sich über einen Winkelbereich von etwas mehr als 180° erstreckt. Das Bügelbefestigungsteil 3 ist mit einem korrespondierenden Ansatz 6 versehen, der in die Ausnehmung 5 einrastbar ist und einen korrespondierenden Querschnitt aufweist, so dass hierdurch ein Schwenkgelenk um eine Schwenkachse 7 ausgebildet wird. Der untere Endabschnitt 8 des Ansatzes 6 bildet einen Anschlag für das Rahmenbefestigungsteil 2, wodurch der Schwenkwinkel begrenzt wird.

Das Rahmenbefestigungsteil 2 weist seinerseits einen Ansatz 9 auf, der den Ansatz 6 teilweise umgreift und in eine Ausnehmung 10 des Bügelbefestigungsteils 3 eingreift. Die Ausnehmung 10 ist annähernd U-förmig gestaltet mit konzentrisch zur Schwenkachse 7 gebogenen Seitenwänden 11 und 12.

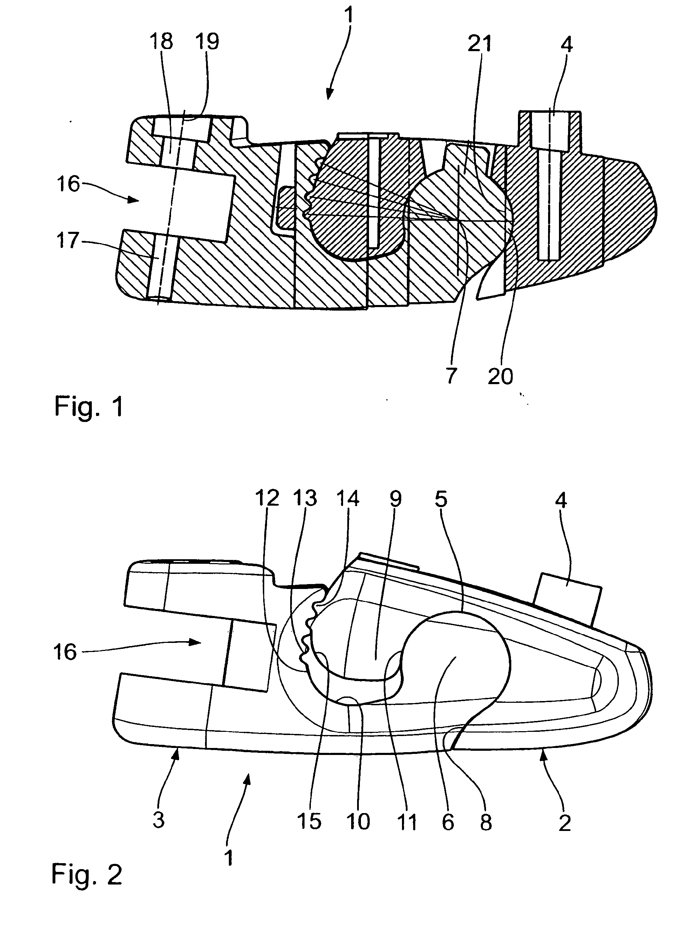

An der Seitenwand 12 des Bügelbefestigungsteils 3 ist eine Mehrzahl von senkrecht zur Zeichenebene verlaufenden Nuten 13 ausgebildet, in die Vorsprünge 14 an der Außenwand 15 des Ansatzes 9 des Rahmenbefestigungsteils 3 eingreifen, so dass, wie in Fig. 1 veranschaulicht, bei einer Schwenkbewegung um die Schwenkachse 7 verschiedene definierte Rastpositionen entsprechend unterschiedlichen Inklinationswinkeln definiert werden. Dabei ist in Fig. 2 eine Endposition der Inklination dargestellt, also die Anschlagposition, und in Fig. 1 die korrespondierende andere Endposition, in der die Vorsprünge 14 in die in Fig. 1 untersten Nuten 13 eingreifen.

Mit anderen Worten könnte man die vorstehend beschriebene Konfiguration also dahingehend zusammenfassen, dass das Rahmenbefestigungsteil 2 und das Bügelbefestigungsteil 3 wie zwei liegende Ziffern "neun" ineinander greifen und ineinander verrastet sind.

Zur Stabilisierung in einer Richtung senkrecht zur Zeichenebene ist vorgesehen, dass das Rahmenbefestigungsteil 2 einen Stegansatz 20 aufweist, der in eine korrespondierende Nut 21 am Ansatz 6 des Bügelbefestigungsteils 3 eingreift.

Das Bügelbefestigungsteil 3 weist in an sich bekannter Weise eine Ausnehmung 16 für einen korrespondierenden Schwenkansatz eines Bügels auf, wobei fluchtende Bohrungen 17, 18 für eine Bügelscharnierschraube vorgesehen sind, um den Bügel um eine solche in der Zeichnung nur mit der Längsachse 19 dargestellte Schraube festzulegen und zu verschwenken.

## Patentansprüche

1. Inklinationsanordnung für eine Brille, umfassend ein horizontales Schwenkgelenk für einen Bügel und eine konzentrisch zum Schwenkgelenk angeordnete Rasteinrichtung umfassend eine Mehrzahl von Nuten und wenigstens einen in die Nuten einrastbaren Vorsprung, **dadurch gekennzeichnet, dass** sie ein Rahmenbefestigungsteil (2) und ein Bügelbefestigungsteil (3) aufweist, wobei das Rahmenbefestigungsteil (2) mit einer im Querschnitt kreisabschnittförmigen Ausnehmung (5) versehen ist, die sich über einen Winkelbereich von etwas mehr als 180° erstreckt, wobei das Bügelbefestigungsteil (3) einen einen korrespondierenden Querschnitt aufweisenden Ansatz (6) besitzt, der in die Ausnehmung (5) des Rahmenbefestigungsteils (3) einrastbar ist, wodurch das Schwenkgelenk gebildet ist, und wobei an einem Berührungsbereich zwischen Rahmenbefestigungsteil (2) und Bügelbefestigungsteil (3) die Rastnuten (13) beziehungsweise Rastvorsprünge (14) ausgebildet sind.

2. Inklinationsanordnung nach Anspruch 1, **dadurch gekennzeichnet, dass** an der Oberseite des Rahmenbefestigungsteils (2) eine, vorzugsweise zwei Befestigungsbohrungen (4) ausgebildet sind.

3. Inklinationsanordnung nach Anspruch 1, **dadurch gekennzeichnet, dass** das Bügelbefestigungsteil (3) eine Scharnierausnehmung (16) und fluchtende Bohrungen (17, 18) aufweist, so dass mittels einer Schraube (19) ein Bügel um eine im Wesentlichen vertikale Achse schwenkbar und einklappbar befestigbar ist.

4. Inklinationsanordnung nach Anspruch 1, **dadurch gekennzeichnet, dass** das Rahmenbefestigungsteil (2) einen Ansatz (9) aufweist, der in eine annähernd U-förmige Ausnehmung (10) des Bügelbefestigungsteils (3) eingreift, wobei die Rastnuten (13) an einer konzentrisch zur Schwenkachse gekrümmten U-Seitenwand (12) und Rastvorsprünge (14) an einer daran anliegenden Stirnwand (15) des Rahmenbefestigungsteils (2) ausgebildet sind.

5. Inklinationsanordnung nach Anspruch 1, **dadurch gekennzeichnet, dass** zur Fixierung in Richtung der Schwenkachse (7) das Rahmenbefestigungsteil (2) einen Stegansatz (15) aufweist, der in eine korrespondierende Nut (16) am Ansatz (6) des Bügelbefestigungsteils (3) eingreift.

6. Brille umfassend eine Inklinationsanordnung nach einem der Ansprüche 1 bis 5.

## Claims

1. Inclination system for spectacles, comprising a horizontal pivot joint for a temple and a locking device disposed concentrically with the pivot joint, the locking device comprising a plurality of grooves and at least one protrusion that is engageable with the grooves, **characterized in that** the inclination system has a frame fixing member (2) and a temple fixing member (3) wherein the frame fixing member (2) is provided with a recess (5) that has a cross-section in the shape of a segment of a circle, the recess (5) extending over an angular range of slightly more than 180°, wherein the temple fixing member (3) has a projection (6) that has a corresponding cross-section and is engageable with the recess (5) of the frame fixing member (3), by means of which the pivot joint is formed, and wherein the locking grooves (13) or locking protrusions (14), respectively, are formed in a contact area between frame fixing member (2) and temple fixing member (3).

2. Inclination system according to claim 1, **characterized in that** one, preferably two fixing holes (4) are formed on the upper side of the frame fixing member (2).

3. Inclination system according to claim 1, **characterized in that** the temple fixing member (3) has a hinge recess (16) and aligned holes (17, 18) so that a temple is fixable by means of a screw (19) so as to be pivotable and foldable about a substantially vertical axis.

4. Inclination system according to claim 1, **characterized in that** the frame fixing member (2) has a projection (9) that engages with an approximately U-shaped recess (10) of the temple fixing member (3) wherein the locking grooves (13) are formed on a U-side wall that is curved concentrically with the pivot axis and locking protrusions (14) are formed on a front wall (15) of the frame fixing member (2), the front wall (15) bearing against the U-side wall (12).

5. Inclination system according to claim 1, **characterized in that** the frame fixing member (2) has a web projection (15) for fixing in the direction of the pivot axis (7), the web projection (15) engaging with a corresponding groove (16) on the projection (6) of the temple fixing member (3).

6. Spectacles comprising an inclination system according to one of claims 1 to 5.

## Revendications

1. Système d'inclinaison pour des lunettes, comportant une articulation pivotante horizontale pour une branche et un dispositif de blocage, disposé concentriquement à l'articulation pivotante, comportant une pluralité de rainures et au moins une saillie apte à être encliquetée dans les rainures, **caractérisé en ce qu'**il comporte un élément de fixation de la monture (2) et un élément de fixation de la branche (3), l'élément de fixation de la monture (2) étant muni d'un évidement (5), qui possède une section en forme de segment de cercle et qui s'étend sur une zone angulaire de plus de 180°, l'élément de fixation de la branche (3) ayant un téton (6), qui possède une section correspondante et qui peut être encliqueté dans l'évidement (5) de l'élément de fixation de la monture (2), il en résulte la formation de l'articulation pivotante, et les rainures de blocage (13) et respectivement les saillies de blocage (14) étant réalisées sur une zone de contact entre l'élément de fixation de la monture (2) et l'élément de fixation de la branche (3).

2. Système d'inclinaison selon la revendication 1, **caractérisé en ce que** sur la face supérieure de l'élément de fixation de la monture (2) est formée une forure de fixation (4), de préférence deux.

3. Système d'inclinaison selon la revendication 1, **caractérisé en ce que** l'élément de fixation de la branche (3) comporte un évidement de charnière (16) et des forures (17, 18) alignées, de telle sorte qu'une branche peut être fixée au moyen d'une vis (19) de manière à pouvoir pivoter et être rabattue autour d'un axe sensiblement vertical.

4. Système d'inclinaison selon la revendication 1, **caractérisé en ce que** l'élément de fixation de la monture (2) comporte un téton (9), qui s'engage dans un évidement (10), sensiblement en forme de U, de l'élément de fixation de la branche (3), les rainures de blocage (13) étant réalisées sur une paroi latérale en U (12) courbée concentriquement à l'axe de pivotement, et des saillies de blocage (14) étant réalisées sur une paroi frontale (15), en appui contre ladite paroi latérale, de l'élément de fixation de la monture (2).

5. Système d'inclinaison selon la revendication 1, **caractérisé en ce que**, pour une immobilisation dans la direction de l'axe de pivotement (7), l'élément de fixation de la monture (2) comporte une nervure (15) qui s'engage dans une rainure (16) correspondante sur le téton (6) de l'élément de fixation de la branche (3).

6. Lunettes comportant un système d'inclinaison selon l'une quelconque des revendications 1 à 5.
